# FASCICULE DE BREVET EUROPEEN

(11) **EP 2 887 369 B1**
(45) Date de publication et mention de la délivrance du brevet: **30.03.2016**
(21) Numéro de dépôt: 14192454.8
(22) Date de dépôt: 10.11.2014
(51) Int. Cl.: H01H 3/48, H01H 31/10, H01H 31/00, H01H 33/666

(54) **Dispositif de commande de la mise à la terre d'un appareillage de protection électrique moyenne tension constitué d'au moins deux appareils de protection électrique**
Steuervorrichtung der Erdung einer elektrischen Mittelspannungs-Schutzanlage, die aus mindestens zwei elektrischen Schutzgeräten besteht
Earthing control device of a medium-voltage electric protection apparatus formed by at least two electric protection apparatuses

(30) Priorité: 17.12.2013 FR 1362807
(43) Date de publication de la demande: 24.06.2015
(73) Titulaire: Schneider Electric Industries SAS, 92500 Rueil-Malmaison (FR)
(72) Inventeur: Terpend, Serge, 38045 GRENOBLE Cedex 09 (FR); Pitis, Florent, 38045 GRENOBLE Cedex 09 (FR)
(74) Mandataire: Colette, Marie-Françoise

(56) Documents cités:
- EP-A1- 1 884 972
- EP-A1- 2 575 155
- EP-A2- 1 921 646
- US-A- 4 484 046

## Description

### DOMAINE TECHNIQUE

La présente invention concerne un dispositif de commande de la mise à la terre d'un appareillage de protection électrique interposé entre deux parties d'un circuit électrique de manière à assurer au moins la fonction de passage du courant entre les parties, la fonction d'interruption du courant, et la fonction de mise à la terre de l'une des parties précitées, ledit appareillage comportant au moins deux appareils de protection électrique, respectivement un premier et un second appareil de protection, montés en parallèle l'un par rapport à l'autre, chaque appareil comportant une branche comportant des moyens d'interruption du courant et des moyens de sectionnement du circuit ou sectionneurs, montés en série, chaque appareil de protection comportant un mécanisme de commande de son sectionneur comportant un arbre.

### ETAT ANTERIEUR DE LA TECHNIQUE

Les dispositifs connus actuellement pour réaliser la commande des deux mécanismes de mise à la terre d'une telle cellule consistent à lier mécaniquement les deux mécanismes au moyen d'une bielle à laquelle est incorporé un système de réglage destiné à absorber les dispersions de distance entre deux cellules juxtaposées.

Les inconvénients d'un tel dispositif de commande tiennent en ce que les vitesses de rotation des deux arbres sont dépendantes l'une de l'autre, d'où il peut résulter des dommages sur les mécanismes. Le système de réglage utilisé est en général compliqué car il ne doit pas se dérégler facilement. En outre, la réalisation du réglage est une manoeuvre compliquée, risquée et coûteuse au moment du montage.

US 4 484 046 divulgue un appareillage de protection selon le préambule de la revendication 1.

### EXPOSE DE L'INVENTION

A cet effet, la présente invention a pour objet un dispositif de commande du genre précédemment mentionné ce dispositif étant caractérisé en ce que le mécanisme de commande dit premier du sectionneur de l'un dit premier des appareils, comporte un organe de manoeuvre actionnable par un utilisateur, et commande le mécanisme dit second de commande du sectionneur, de l'appareil dit second, par l'intermédiaire d'un mécanisme dit de liaison, de telle manière que pendant une première partie de la manoeuvre d'actionnement de l'organe de manoeuvre dans le sens de l'ouverture du premier sectionneur jusqu'à une certaine position en rotation de l'arbre associé audit sectionneur, dite position maximum, les deux arbres de commande respectivement des deux sectionneurs soient liés en rotation, et que dés que le second sectionneur a atteint une certaine distance d'éloignement par rapport à son contact de ligne associé, permettant d'assurer une certaine distance d'isolement dans la branche correspondante, les deux mécanismes sont découplés de manière que les deux arbres continuent leur course en rotation indépendamment l'un de l'autre dans le sens de l'ouverture des sectionneurs.
Ce dispositif permet la commande des deux mécanismes par un seul levier de manoeuvre, et permet à chacun des mécanismes de fermeture de garder sa vitesse de fermeture sans influencer l'autre mécanisme.

Selon une caractéristique particulière, le sectionneur dit premier est un sectionneur de mise à la terre tandis que le sectionneur dit second est un sectionneur simple d'ouverture du circuit.

Selon une autre caractéristique, la vitesse de rotation de l'arbre d'entraînement du premier sectionneur est plus élevée que celle de l'arbre d'entraînement du second sectionneur de sorte que lors de la seconde partie de la manoeuvre d'actionnement de l'organe de manoeuvre dans le sens de l'ouverture, le premier sectionneur termine sa course avant le second.

Selon une autre caractéristique, ce dispositif comporte en outre des moyens de réglage pour absorber les dispersions de distance entre les deux appareils.

Selon une autre caractéristique, le mécanisme de liaison précité comporte lesdits moyens de réglage.

Selon une autre caractéristique, le mécanisme de liaison précité comporte deux manivelles solidaires en rotation respectivement des deux arbres de commande respectivement des premier et second sectionneurs, deux bielles reliées de manière articulée par l'une de leurs extrémités respectivement aux deux manivelles, et par leur extrémité opposée, l'une à l'autre, autour d'un axe d'articulation formant galet apte à coopérer à coulissement avec une rainure formée dans un support relié mécaniquement au châssis de l'appareillage, cette rainure assurant le guidage du galet pendant la première partie de la manoeuvre d'actionnement de l'organe de manoeuvre dans le sens de l'ouverture des sectionneurs, ledit galet étant libéré de cette rainure au moment du dépassement de la position maximum précitée de l'arbre d'actionnement du premier sectionneur, de telle manière que les deux arbres, après cette position, puisse tourner librement selon leur propre vitesse imposée par leur propre moyen d'entraînement jusqu'à une position correspondant à une ouverture maximale des sectionneurs.
Grâce à ces caractéristiques, l'on absorbe automatiquement la dispersion de distance entre deux cellules au moment du montage sans qu'il soit nécessaire d'effectuer des réglages.

Selon une autre caractéristique, le support précité comporte également une rampe apte à guider le galet lors d'une manoeuvre de remise en ligne des deux sectionneurs après une manoeuvre d'ouverture, cette rampe étant située dans le prolongement de l'un des bords longitudinaux de la rainure précitée de telle manière que lors d'une manoeuvre de remise en ligne des sectionneurs, le galet soit dans un premier temps guidé par la rampe, puis pénètre dans cette rainure et soit ensuite guidé par les bords longitudinaux délimitant cette rainure, les deux arbres précités étant couplés pendant toute la manoeuvre de remise en ligne, les deux sectionneurs atteignant leur position de mise en ligne en même temps.

Selon une autre caractéristique, la rampe précitée se situant dans le prolongement de l'un des bords longitudinaux de la rainure, ce bord présente une longueur inférieure à celle de l'autre bord longitudinal, ladite rampe s'étendant en s'éloignant de la direction longitudinale du premier bord longitudinal.

Selon une autre caractéristique, la rainure précitée s'étend suivant une direction s'étendant sensiblement parallèlement au plan passant par les deux axes de rotation respectivement des deux arbres.

Selon une autre caractéristique, les moyens de réglage précités comportent un moyen pour autoriser le déplacement en translation du galet suivant une direction sensiblement perpendiculaire au plan contenant les deux axes respectifs des deux arbres, ce déplacement du galet correspondant à une variation de brisure des bielles au niveau du galet de guidage, et permettant de réaliser une compensation des variations de distance entre deux appareils juxtaposés lors du montage des deux appareils.

Selon une autre caractéristique, ces moyens de réglage comportent un deuxième support solidaire du châssis de l'appareillage, ledit second support comportant des ouvertures, ou axes de guidages, aptes à coopérer avec des axes de guidage, respectivement des ouvertures, prévus dans le premier support de manière à permettre le guidage en translation du premier support par rapport au second support lors de la translation précitée du galet.

Selon une autre caractéristique, ce dispositif comporte des moyens de blocage du système de réglage en position.

Selon une autre caractéristique, les deux arbres sont manoeuvrés au moyen d'un ressort de manoeuvre, dont la force et donc également l'effort nécessaire à leur actionnement est plus élevé pour le ressort du premier sectionneur que pour le ressort du second actionneur. Ces caractéristiques permettent à un utilisateur de garder un effort de manoeuvre conforme aux normes,

Selon une autre caractéristique, les deux appareils précités sont conçus pour conduire un courant de 630 A, et sont associés de manière à réaliser une cellule moyenne tension adaptée à tenir un courant de 1250A.

La présente invention a encore pour objet une cellule moyenne tension comportant un dispositif de commande comportant les caractéristiques précédemment mentionnées prises seules ou en combinaison.

### BREVE DESCRIPTION DES DESSINS

Mais d'autres avantages et caractéristiques de l'invention apparaîtront mieux dans la description détaillée qui suit et se réfère aux dessins annexés donnés uniquement à titre d'exemple et dans lesquels :
- La figure 1 est une vue en perspective d'une cellule de distribution électrique moyenne tension selon l'invention, cette cellule étant constituée de deux cellules de base juxtaposées
- La figure 2 est une vue en perspective de la même cellule, à laquelle les parois extérieures ont été retirées,
- La figure 3 est une vue en perspective illustrant seulement le mécanisme de commande de la mise à la terre de la cellule, le châssis de la cellule ayant été retiré par rapport à la figure 2, et vu de face,
- La figure 4 est une vue en perspective du même mécanisme vu de l'arrière,
- La figure 5 est une vue schématique illustrant le fonctionnement du mécanisme d'une cellule selon l'invention équipée d'un dispositif de commande selon l'invention,
- Les figures 6 à 9 sont des vues en plan illustrant le dispositif de commande de la cellule moyenne tension selon l'invention dans différentes positions allant d'une position en ligne à une position de mise à la terre de la cellule,

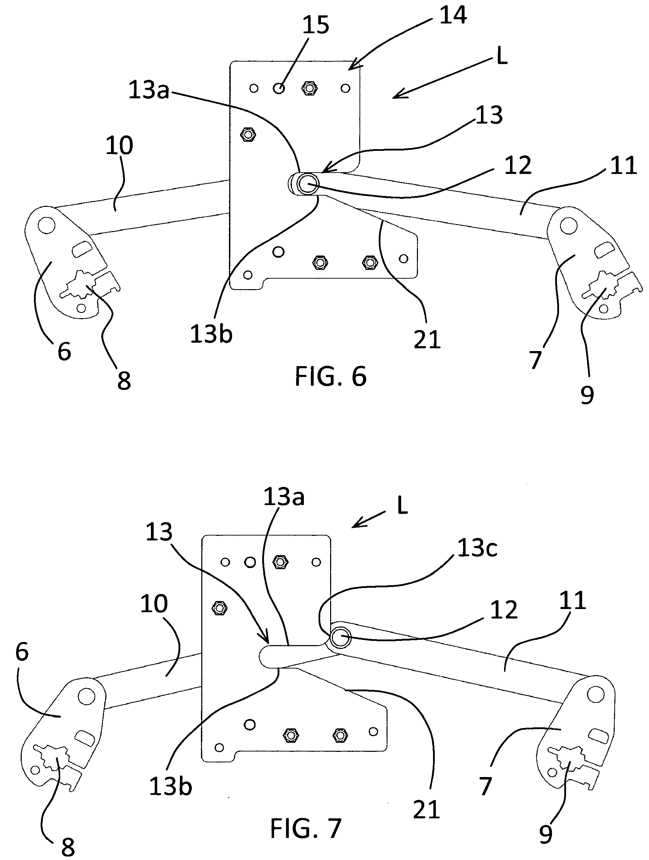

- La figure 6 illustre ce dispositif de commande dans une position dite en ligne des mécanismes de mise à la terre,
- La figure 7 illustre ce même dispositif, après une première manoeuvre des deux mécanismes dans le sens d'une ouverture des mécanismes de mise à la terre, jusqu'à un point dit maximum,

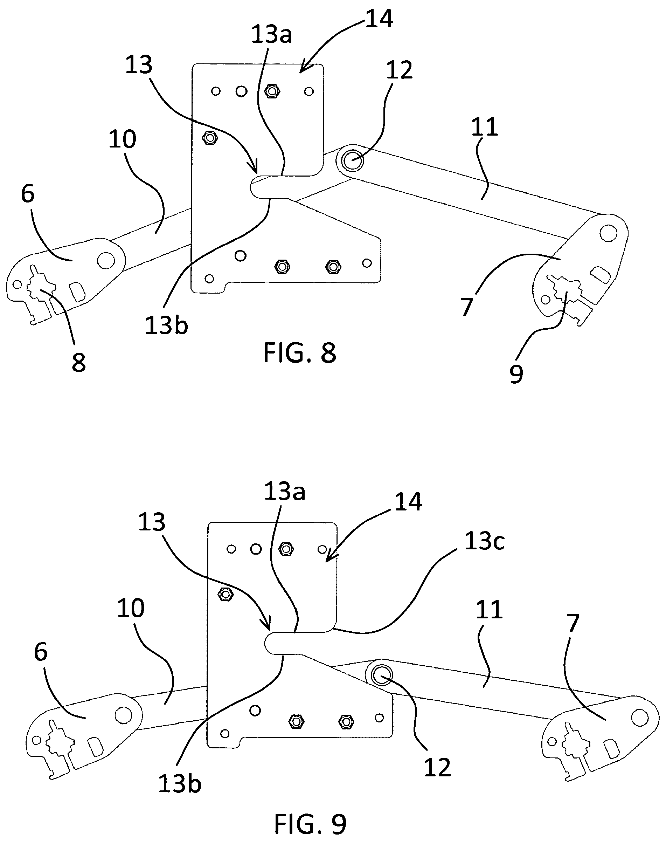

- La figure 8 illustre ce même dispositif après le passage de cette position dite de maximum,
- La figure 9 illustre ce même dispositif, les deux mécanismes ayant terminé leur course dans le sens de l'ouverture des sectionneurs,

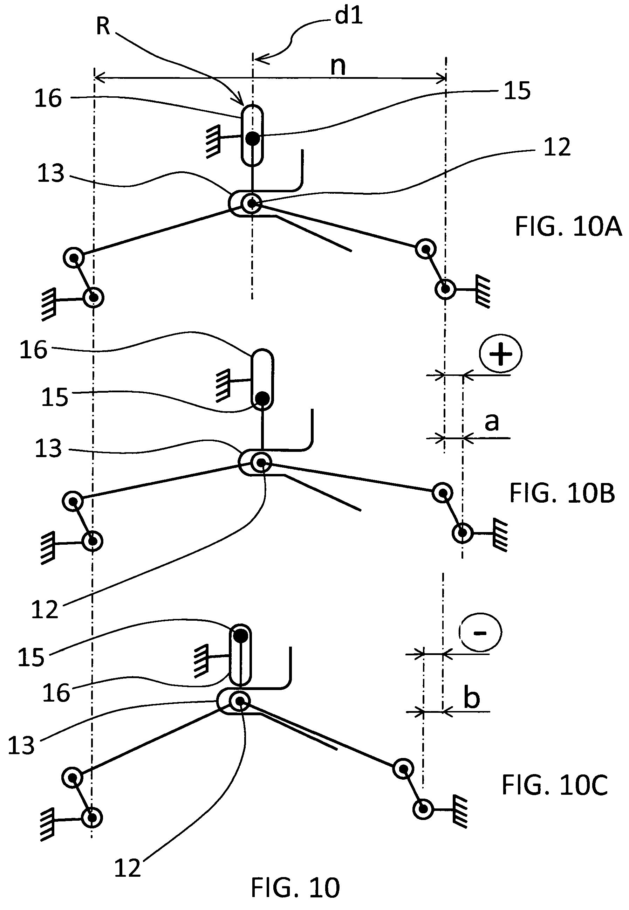

- La figure 10 illustre schématiquement le fonctionnement du dispositif de réglage selon l'invention, lequel est destiné à compenser les dispersions de distance entre deux appareils, les figures 10a,10b et 10c illustrant respectivement trois positions différentes de ce dispositif de réglage, et

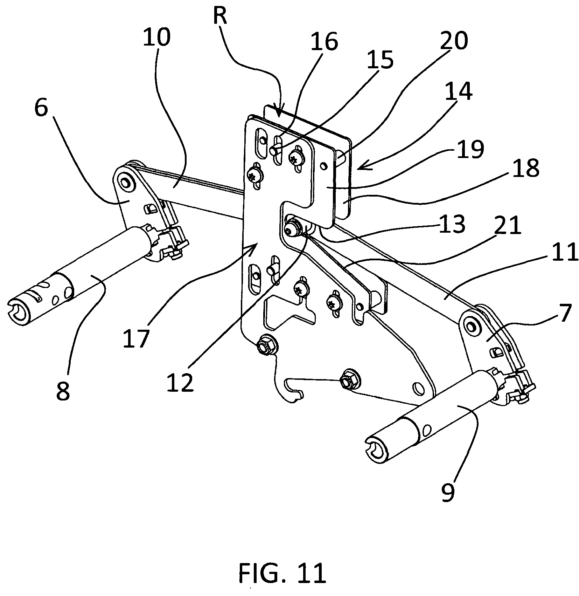

- La figure 11 est une vue partielle en perspective, illustrant ce dispositif de réglage, vu de l'arrière de l'appareil.

### EXPOSE DETAILLE D'UN MODE DE REALISATION PARTICULIER PREFERE.

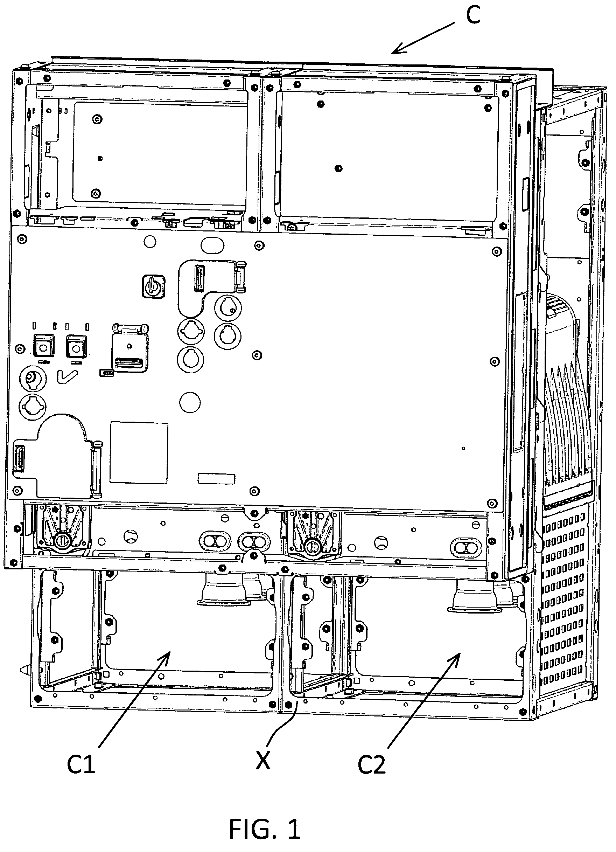

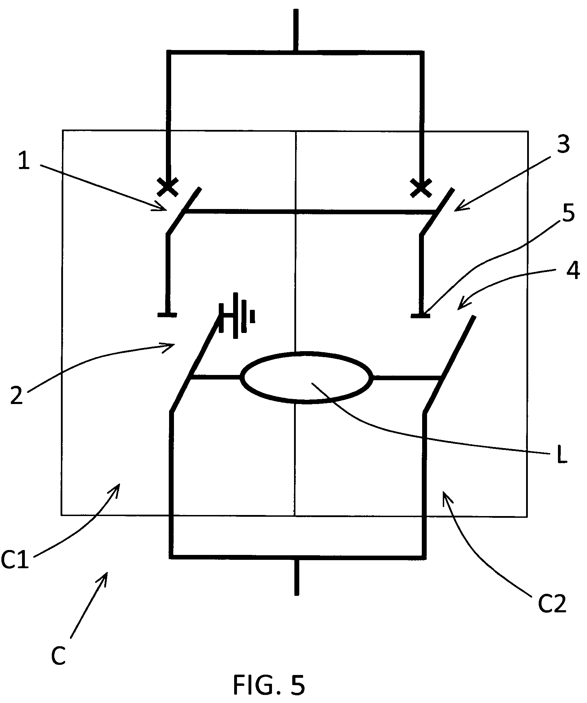

Sur la figure 1, on voit une cellule de distribution électrique moyenne tension C selon l'invention, destinée à relier électriquement deux jeux de barres et à conduire un courant nominal élevé, par exemple dans cette réalisation particulière, un courant de 1250A, cette cellule étant constituée par la juxtaposition de deux cellules ou appareils C1,C2 dites standard conçues pour conduire un courant nominal plus faible, c'est-à-dire de 630A.
Le fonctionnement d'une telle cellule est décrit de manière schématique sur la figure 5.
Cette cellule C est destinée à assurer plusieurs fonctions, lesquelles sont respectivement, de permettre le passage du courant entre les jeux de barre, de réaliser une interruption du courant suite à la survenue d'un défaut électrique dans le circuit, pouvant survenir par exemple lors d'un court-circuit apparu dans le réseau, et de réaliser une mise à la terre du circuit destinée à permettre une exploitation indépendante des deux parties du réseau.
A cet effet, tel qu'illustré sur cette figure 5, cette cellule C comporte deux branches ou cellules disposées en parallèle. La première cellule C1 comporte un disjoncteur 1 comportant une ampoule à vide en série avec un sectionneur de mise à la terre 2, tandis que la seconde cellule C2 comporte un disjoncteur 3 en série avec un sectionneur 4 simple d'ouverture du circuit, non susceptible d'être relié à la terre. Selon cette réalisation particulière, ces disjoncteurs 1,3 sont aptes à réaliser également une fonction de sectionnement.
Ainsi, l'on peut voir sur cette figure 5, que les arbres de commande des deux contacts mobiles respectivement des deux disjoncteurs 1,3 sont couplés tandis que le sectionneur de mise à la terre 2 de la première cellule C1 et le sectionneur 4 de la seconde cellule C2 sont reliés mécaniquement par un dispositif de liaison mécanique L selon l'invention.
Le sectionneur 4 du second appareil C2 n'a pas de liaison électrique avec la terre (il n'y a pas de contact terre de ce côté). Cet interrupteur ouvre seulement le circuit et assure une distance d'isolement avec les contacts ligne 5. L'énergie nécessaire à l'utilisateur pour assurer la rotation de l'arbre de commande de ce sectionneur 4 est beaucoup plus faible que celle nécessaire à la rotation de l'arbre d'entraînement du premier sectionneur 2. En conséquence, l'effort de manoeuvre à fournir par un utilisateur pour une mise en ligne de la cellule reste conforme à la norme.

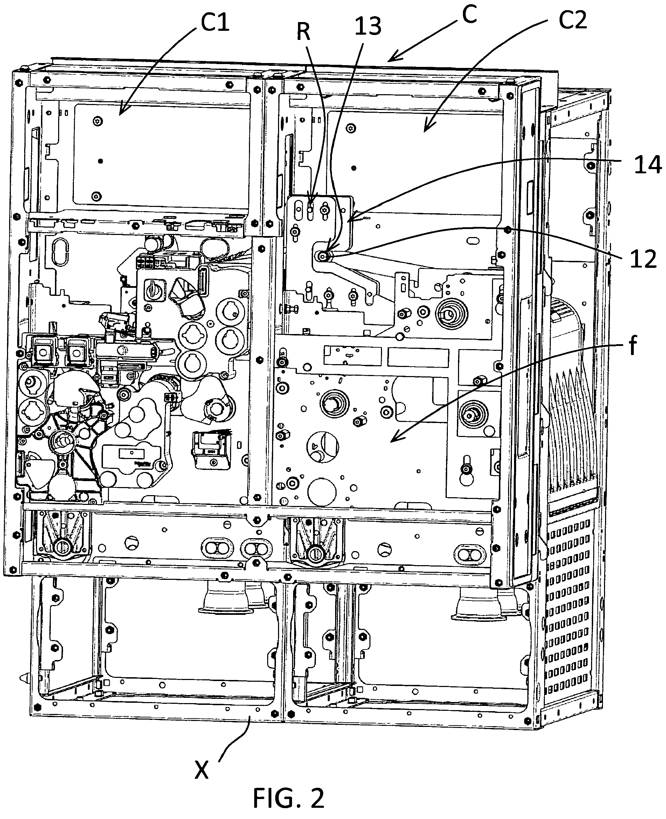

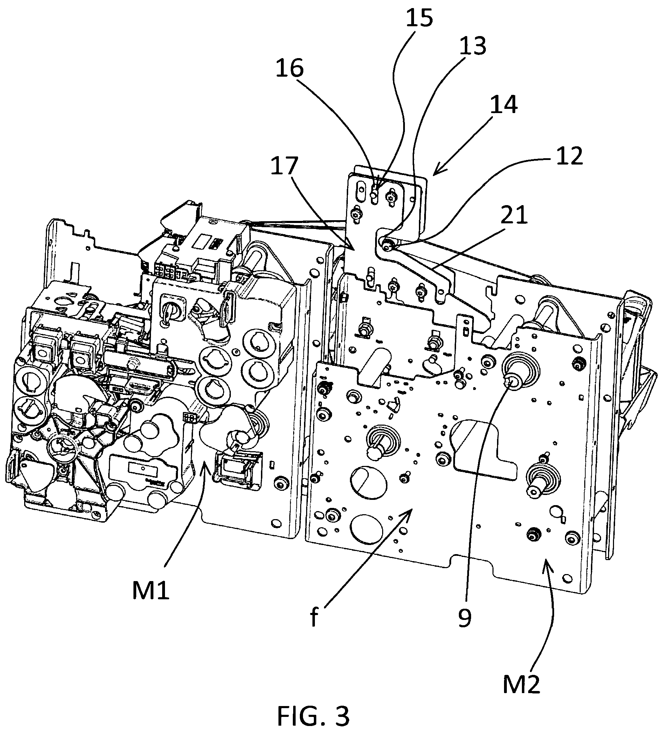

Chaque appareil ou cellule C1,C2 de base de la cellule selon l'invention comporte un mécanisme M1 ,M2 d'actionnement de son sectionneur 2,4 qui lui est propre. Tel qu'illustré sur les figures 1 à 3, l'on voit que le mécanisme M1 de la première cellule C1 comporte un arbre de manoeuvre de la mise à la terre qui est accessible pour un utilisateur par l'intermédiaire d'un organe de manoeuvre à travers une ouverture prévue à cet effet, alors que le mécanisme M2 de la seconde cellule comporte un arbre d'entraînement du sectionneur qui n'est pas accessible pour un utilisateur. Le châssis du mécanisme de cette seconde cellule est dépouillé en face avant par rapport à celui de la première cellule qui comporte les entrées de commande par levier de manoeuvre pour le disjoncteur et le sectionneur, un synoptique de visualisation de la position des contacts du circuit, un sélecteur d'inter verrouillage entre le disjoncteur et le sectionneur, les systèmes de verrouillage par serrures et volets cadenassables, de boutons de commande du mécanisme du disjoncteur. Dans cette seconde cellule C2, la face avant f du châssis sert uniquement comme point de rotation des différents arbres de renvoi appartenant au dispositif de liaison mécanique selon l'invention.

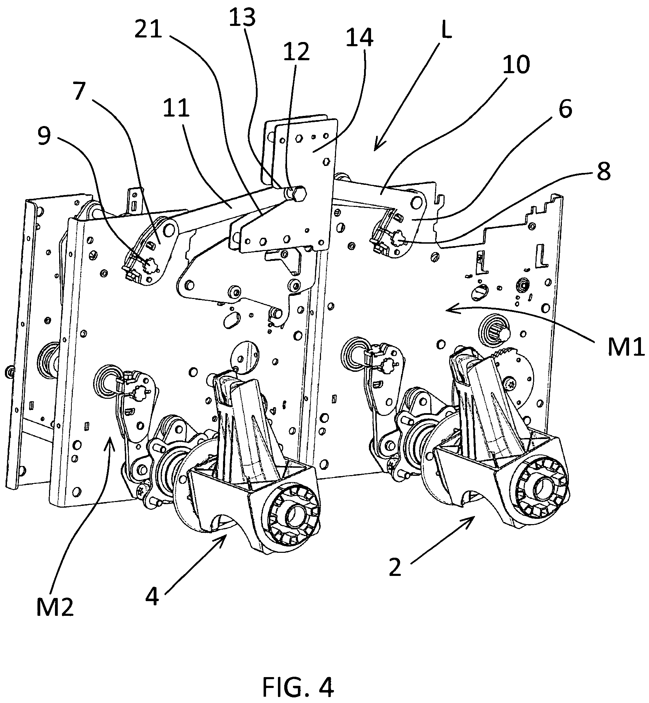

Sur la figure 4, sont représentés les sectionneurs, lesquels sont commandés par le dispositif de commande selon l'invention par l'intermédiaire des mécanismes de commande M1,M2 propres à chaque cellule ou appareil C1,C2 et d'un dispositif de liaison mécanique L.
Ce dispositif de liaison mécanique L va être décrit dans ce qui suit en référence aux figures 6 à 9 et 11.
Ce dispositif comporte une première 6 et une seconde 7 manivelle de manoeuvre, lesdites manivelles étant couplées respectivement aux deux arbres 8,9 d'entraînement des deux sectionneurs 2,4. Ces deux manivelles 6,7 sont reliées de manière articulée chacune à l'une des extrémités respectivement d'une bielle 10 dite première et d'une bielle dite seconde 11, ces deux bielles étant reliées de manière articulée l'une à l'autre par leur extrémité opposée au moyen d'un axe d'articulation formant galet 12 monté coulissant dans une rainure 13 prévue dans un support 14 dit premier, relié mécaniquement au châssis X de la cellule C. Cette rainure 13 est prolongée par une rampe 21 dont la direction longitudinale est inclinée vers l'extérieur de la rainure 13, par rapport à la direction longitudinale de la rainure, de telle manière que la direction longitudinale de cette rampe 21 forme un angle d'environ 45° par rapport à la direction longitudinale de la rainure 13.
La longueur des bords longitudinaux 13a, 13b de la rainure précitée 13 et de la rampe 21 sont telles que le fonctionnement du dispositif est tel qu'il va être décrit dans ce qui suit en référence aux figures 6 à 9.
Sur la figure 6, les deux mécanismes M1,M2 ont entraînés les deux sectionneurs 2,4 en position ligne, c'est-à-dire que les contacts des sectionneurs sont dans une position permettant le passage du courant entre les deux jeux de barre.
Lors d'une manoeuvre de l'utilisateur dans le but d'ouvrir ces contacts afin d'effectuer une mise à la terre de la cellule C, la manivelle dite première 6 est entraînée en rotation dans le sens horaire par actionnement de l'organe de manoeuvre dans ce même sens de rotation. Ceci entraîne d'une part, le déplacement de l'axe d'articulation 12 des deux bielles formant galet dans ladite rainure 13 en direction de l'autre manivelle 7, cet axe 12 étant guidé le long des bords 13a,13b de la rainure 13 et d'autre part, la rotation dans le sens horaire de la manivelle dite seconde 7 d'entraînement de l'arbre 9 d'entraînement du second sectionneur 4.
Le mouvement d'entraînement en rotation de cette manivelle dite première 6 est poursuivi jusqu'à une position qui correspond au passage de l'axe d'articulation 12 au coin 13c formé à l'extrémité du bord longitudinal supérieur 13a de la rainure 13 (tel qu'illustré sur la figure 7). Cette position correspond également à une position de point mort des mécanismes ou à un point dit « maximum », cette position étant définie de manière qu'en cette position, le second mécanisme M2 a entraîné le sectionneur dit second 4 dans une position dans laquelle il assure une certaine distance d'ouverture avec le contact fixe 5 de la ligne. Ainsi, tant que l'axe d'articulation 12 n'a pas atteint cette position, cette distance d'ouverture n'est pas atteinte.
Lorsque les mécanismes M1, M2 ont atteint cette position de passage de point mort, l'axe formant galet 12 n'est plus guidé et les manivelles 6,7 sont libres de leur mouvement. Les deux mécanismes M1,M2 fonctionnent alors indépendamment l'un de l'autre, tel qu'illustré sur la figure 8. L'arbre d'entraînement 8 du sectionneur 2 du premier mécanisme M1 étant plus rapide que l'arbre d'entraînement 9 du sectionneur 4 du second mécanisme M2, le premier sectionneur termine sa course avant le second, position illustrée sur la figure 8.
Ainsi, sur la figure 9, les deux mécanismes M1, M2 ont terminé leur mouvement et ont amené la cellule C dans une position de mise à la terre dans laquelle l'interrupteur de mise à la terre 2 du premier mécanisme M1 est en position de mise à la terre tandis que le sectionneur 4 du second mécanisme M2 est en position d'ouverture respectant une certaine distance d'ouverture.
Lors d'une remise en ligne de la cellule C, l'utilisateur entraîne l'organe de manoeuvre et donc l'arbre 8 du premier mécanisme M1 dans le sens antihoraire. Pendant ce mouvement, l'axe formant galet 12 suit dans un premier temps la rampe 21 du support 14, et la seconde bielle 11 entraîne en rotation la seconde manivelle 7 dans le sens antihoraire. Les deux mécanismes M1,M2 sont en position de mise en ligne en même temps.
Cette cellule C comporte en outre, conformément à l'invention, un dispositif de réglage R apte à compenser les variations de distance entre les deux cellules de base C1,C2. Ce dispositif de réglage R comporte des moyens pour permettre à l'axe d'articulation 12 des bielles, formant galet précité, de se déplacer en translation suivant une direction d1 sensiblement perpendiculaire à la direction de son déplacement dans la rainure 13 du support dit premier 14. Ceci est rendu possible par l'intermédiaire de plusieurs axes de guidage 15 solidaires du premier support 14, ce premier support étant monté coulissant par rapport à un second support 17 fixe par rapport au châssis X de l'appareillage, lesdits axes de guidage coopérant avec des ouvertures de guidage 16 prévues dans ce second support 17. Ainsi, les variations de distance entre les deux cellules C1, C2 engendrent un déplacement en translation du galet 12 suivant cette direction sensiblement perpendiculaire à sa direction de déplacement dans le support dit premier 14, ce mouvement étant rendu possible et guidé par le déplacement des axes de guidage précités 15 dans les ouvertures correspondantes. Ainsi, les variations de la distance entre deux cellules C1,C2 sont compensées par une plus ou moins grande brisure entre les deux bielles 10,11 au point d'articulation des deux bielles, cette variation de brisure engendrant un déplacement du galet 12 selon la direction précitée d1, ce déplacement étant autorisé et guidé par les éléments de guidage précités 15 coopérant avec les ouvertures 16.
Ainsi, sur la figure 10a, le dispositif de réglage R est dans une position correspondant à une distance nominale n entre les deux cellules C1,C2, dans laquelle position les éléments ou axes de guidage 15 se trouvent sensiblement au centre des ouvertures précitées 16.
Sur la figure 10b, la distance entre les deux cellules est augmentée d'une certaine valeur a par rapport à la distance nominale n. Ceci conduit à une brisure moins importante entre les deux bielles, et à ce que les éléments de guidage 15 se trouvent à l'extrémité inférieure des ouvertures correspondantes 16.
Au contraire, sur la figure 10c, la distance entre les deux cellules C1,C2 est diminuée d'une certaine valeur b par rapport à la distance nominale entre les deux cellules. Dans cette position, les éléments de guidage 15 se trouvent à l'extrémité supérieure des ouvertures correspondantes 16.
Selon une réalisation préférée de l'invention illustrée sur la figure 11, le support dit premier 14, comporte deux flasques 18,19 en regard, chacun des deux flasques comportant une ouverture de forme oblongue formant une rainure 13 délimitée par deux bords longitudinaux 13a,13b en regard dont l'un dit supérieur 13a, présente une longueur supérieur à l'autre 13b dit inférieur, le bord longitudinal inférieur 13b se prolongeant par une rampe 21 dirigée vers l'extérieur de la rainure 13. Ces deux flasques sont solidarisés l'un à l'autre par quatre axes de fixation 20 situés aux quatre coins des flasques et joignant deux à deux lesdits flasques.
Ainsi, la compensation des variations de largeur de la cellule C est réalisée par le déplacement du galet 12 suivant la direction d1, et ainsi, du support dit premier 14 par rapport au support dit second 17, lequel galet 12 est guidé au cours de ce mouvement par les axes de guidage 15 coopérant avec les ouvertures 16 correspondantes. Ce système de réglage R se positionne automatiquement au moment du montage des appareils, il suffit de le bloquer dans cette position afin de maintenir constante la position du support 14 selon la direction précitée d1. En effet, après liaison des deux cellules C1,C2, la position du galet 12 est déterminée, le galet 12 positionne ainsi le support dit premier 14 par rapport au support dit second 17.

On a donc réalisé selon l'invention un dispositif de commande de la mise à la terre d'une cellule moyenne tension constituée de deux cellules standard et comportant chacune un mécanisme de commande d'un sectionneur de circuit, ledit dispositif de commande permettant la commande des deux mécanismes par un seul levier de manoeuvre, en gardant un effort de manoeuvre par l'opérateur conforme aux normes, l'invention permettant aux deux mécanismes de fermeture de garder leur vitesse de fermeture sans influencer l'autre mécanisme. L'invention permet également d'absorber automatiquement la dispersion de distance entre deux cellules au moment du montage sans qu'il soit nécessaire d'effectuer des réglages.
On obtient donc un dispositif de commande présentant un coût de production et d'utilisation faibles grâce à un nombre de pièces réduit au minimum, lesquelles pièces sont réalisées au moyen d'un usinage simple, et sans réglage nécessaire lors du montage des appareils.
On notera que le sectionneur d'ouverture simple n'a pas besoin d'une vitesse rapide, en conséquence, son ressort de manoeuvre est beaucoup plus faible que celui du sectionneur de mise à la terre. En conséquence, l'association de ces deux sectionneurs permet de limiter les efforts de manoeuvre.
On notera également que pour la commande des dispositifs de coupure, il y a de préférence un seul mécanisme situé du côté gauche et qui commande les deux ampoules des disjoncteurs à vide. Une simple bielle réalise le couplage des deux appareils à ce niveau. Un dispositif de compensation des distances de tout type pourra être prévu à ce niveau également. Par conception, une ampoule à vide travaille sur des courses d'usure de la zone de contact très faible, de l'ordre de quelques millimètres, ce qui nécessite un réglage très précis et indépendant pour chaque ampoule à vide avec l'appareil en position fermée. Ce réglage se situe à l'arrière de chaque ampoule à vide par un système comprenant vis, écrou et contre-écrou. La compensation des dispersions de largeur de la cellule est récupérée par le réglage de la course d'usure des contacts. On remarquera qu'en haute tension, les appareils sont le plus souvent tripolaires, ce qui nécessitera pour cet appareil 1250A, six ampoules.

Bien entendu, l'invention n'est pas limitée aux modes de réalisation décrits et illustrés qui n'ont été donnés qu'à titre d'exemple.
Au contraire, l'invention comprend tous les équivalents techniques des moyens décrits ainsi que leurs combinaisons.

## Revendications

1. Appareillage de protection électrique comportant un dispositif de commande de sa mise à la terre, ledit appareillage étant interposé entre deux parties d'un circuit électrique de manière à assurer au moins la fonction de passage du courant entre les parties, la fonction d'interruption du courant, et la fonction de mise à la terre de l'une des parties précitées, ledit appareillage comportant au moins deux appareils de protection électrique (C1,C2), respectivement un premier et un second appareil de protection, montés en parallèle l'un par rapport à l'autre, chaque appareil comportant une branche comportant des moyens d'interruption du courant et des moyens de sectionnement du circuit, ou sectionneurs, montés en série, chaque appareil de protection comportant un mécanisme de commande (M1,M2) de son sectionneur comportant un arbre (8,9), tandis que le mécanisme de commande dit premier M1 du sectionneur de l'un C1 dit premier des appareils, comporte un organe de manoeuvre actionnable par un utilisateur, et commande le mécanisme dit second M2 de commande du sectionneur de l'appareil dit second C2, par l'intermédiaire d'un mécanisme dit de liaison L, de telle manière que pendant une première partie de la manoeuvre d'actionnement de l'organe de manoeuvre dans le sens de l'ouverture du premier sectionneur (2) jusqu'à une certaine position en rotation de l'arbre (8) associé audit sectionneur (2), dite position maximum, les deux arbres de commande (8,9) respectivement des deux sectionneurs (2,4) soient liés en rotation, **caractérisé en ce que** dés que le second sectionneur (4) a atteint une certaine distance d'éloignement par rapport à son contact de ligne associé (5), permettant d'assurer une certaine distance d'isolement dans la branche correspondante, les deux mécanismes M1,M2 sont découplés de manière que les deux arbres (8,9) continuent leur course en rotation indépendamment l'un de l'autre dans le sens de l'ouverture des sectionneurs (2,4).

2. Appareillage selon la revendication 1, **caractérisé en ce que** le sectionneur dit premier (2) est un sectionneur de mise à la terre, tandis que le sectionneur dit second (4) est un sectionneur simple d'ouverture du circuit.

3. Appareillage selon la revendication1 ou 2, **caractérisé en ce que** la vitesse de rotation de l'arbre d'entraînement (8) du premier sectionneur (2) est plus élevée que celle de l'arbre d'entraînement (9) du second sectionneur (4) de sorte que lors de la seconde partie de la manoeuvre d'actionnement de l'organe de manoeuvre dans le sens de l'ouverture, le premier sectionneur (2) termine sa course avant le second (4).

4. Appareillage selon l'une quelconque des revendications 1 à 3, **caractérisé en ce que** le dispositif de commande précité comporte en outre des moyens de réglage R pour absorber les dispersions de distance entre les deux appareils C1,C2.

5. Appareillage selon la revendication 4, **caractérisé en ce que** le mécanisme de liaison précité L comporte lesdits moyens de réglage R.

6. Appareillage selon l'une quelconque des revendications précédentes, **caractérisé en ce que** le mécanisme de liaison précité L comporte deux manivelles (6,7) solidaires en rotation respectivement des deux arbres de commande (8 ,9) respectivement des premier et second sectionneurs (2,4), deux bielles (10,11) reliées de manière articulée par l'une de leurs extrémités respectivement aux deux manivelles (6,7), et par leur extrémité opposée, l'une à l'autre, autour d'un axe d'articulation formant galet (12) apte à coopérer à coulissement avec une rainure (13) formée dans un support (14) relié mécaniquement au châssis X de l'appareillage, cette rainure (13) assurant le guidage du galet (12) pendant la première partie de la manoeuvre d'actionnement de l'organe de manoeuvre dans le sens de l'ouverture des sectionneurs (2,4), ledit galet (12) étant libéré de cette rainure (13) au moment du dépassement de la position maximum précitée de l'arbre (8) d'actionnement du premier sectionneur (2), de telle manière que les deux arbres (8,9), après cette position, puisse tourner librement selon leur propre vitesse imposée par leur propre moyen d'entraînement jusqu'à une position correspondant à une ouverture maximale des sectionneurs (2,4).

7. Appareillage selon la revendication 6, **caractérisé en ce que** le support précité (14) comporte également une rampe (21) apte à guider le galet (12) lors d'une manoeuvre de remise en ligne des deux sectionneurs (2,4) après une manoeuvre d'ouverture, cette rampe (21) étant située dans le prolongement de l'un (13b) des bords longitudinaux (13a,13b) de la rainure précitée (13) de telle manière que lors d'une manoeuvre de remise en ligne des sectionneurs (2,4), le galet (12) soit dans un premier temps guidé par la rampe (21), puis pénètre dans cette rainure (13) et soit ensuite guidé par les bords longitudinaux (13a,13b) délimitant cette rainure (13), les deux arbres précités (8,9) étant couplés pendant toute la manoeuvre de mise en ligne, les deux sectionneurs (2,4) atteignant leur position de mise en ligne en même temps.

8. Appareillage selon la revendication 7, **caractérisé en ce que** la rampe précitée (21) se situant dans le prolongement de l'un (13b) des bords longitudinaux de la rainure (13), ce bord (13b) présente une longueur inférieure à celle de l'autre bord longitudinal (13a), ladite rampe (21) s'étendant en s'éloignant de la direction longitudinale du premier bord longitudinal (13a).

9. Appareillage selon la revendication 8, **caractérisé en ce que** la rainure précitée (13) s'étend suivant une direction s'étendant sensiblement parallèlement au plan passant par les deux axes de rotation respectivement des deux arbres (8,9).

10. Appareillage selon l'une quelconque des revendications 4 à 9, **caractérisé en ce que** les moyens de réglage précités R comportent un moyen pour autoriser le déplacement en translation du galet (12) suivant une direction sensiblement perpendiculaire au plan contenant les deux axes respectifs des deux arbres (8,9), ce déplacement du galet correspondant à une variation de brisure des bielles (10,11) au niveau du galet de guidage (12), et permettant de réaliser une compensation des variations de distance entre deux appareils (C1 ,C2) juxtaposés lors du montage des deux appareils.

11. Appareillage selon la revendication 10, **caractérisé en ce que** ces moyens de réglage R comportent un deuxième support (17) solidaire du châssis X de l'appareillage, ledit second support (17) comportant des ouvertures (16), ou axes de guidages, aptes à coopérer avec des axes de guidage (15), respectivement des ouvertures, prévus dans le premier support (14) de manière à permettre le guidage en translation du premier support (14) par rapport au second support (17) lors de la translation précitée du galet.

12. Appareillage selon l'une quelconque des revendications 4 à 11, **caractérisé en ce qu'**il comporte des moyens de blocage du système de réglage R en position.

13. Appareillage selon l'une quelconque des revendications précédentes, **caractérisé en ce que** les deux arbres (8,9) sont manoeuvrés au moyen d'un ressort de manoeuvre, dont la force et donc également l'effort nécessaire à leur actionnement, est plus élevé pour le ressort du premier sectionneur (2) que pour le ressort du second actionneur (4).

14. Appareillage selon l'une quelconque des revendications précédentes, **caractérisé en ce que** les deux appareils précités (C1,C2) sont conçus pour conduire un courant de 630 A, et sont associés de manière à réaliser une cellule C moyenne tension adaptée à tenir un courant de 1250A.

15. Cellule de protection électrique moyenne tension, **caractérisée en ce qu'**elle comporte au moins un appareillage selon l'une quelconque des revendications 1 à 14.

## Patentansprüche

1. Elektrisches Schutzgerät, umfassend eine Steuervorrichtung seiner Erdung, wobei das Gerät zwischen zwei Teilen eines elektrischen Schaltkreises angeordnet ist, um zumindest die Funktion des Stromdurchgangs zwischen den Teilen, die Funktion der Stromunterbrechung und die Funktion der Erdung eines der vorgenannten Teile zu gewährleisten, wobei das Gerät zumindest zwei elektrische Schutzgeräte (C1, C2) ein erstes bzw. ein zweites Schutzgerät, umfasst, die parallel zueinander montiert sind, wobei jedes Gerät einen Abschnitt besitzt, umfassend Mittel zur Stromunterbrechung und Mittel zur Trennung des Schaltkreises oder Trennschalter, die in Serie montiert sind, wobei jedes Schutzgerät einen Mechanismus zur Steuerung (M1, M2) seines Trennschalters besitzt, umfassend eine Welle (8, 9), während der Steuermechanismus des ersten M1 des Trennschalters des einen C1, erstes der Geräte genannt, ein von einem Benutzer betätigbares Steuerelement umfasst und den so genannten zweiten Steuermechanismus M2 des Trennschalters des so genannten zweiten Geräts C2 mit Hilfe eines so genannten Verbindungsmechanismus L derart steuert, dass während eines ersten Teils der Betätigungssteuerung des Betätigungselements in die Richtung der Öffnung des ersten Trennschalters (2) bis in eine gewisse Rotationsposition der Welle (8), die dem Trennschalter (2) zugeordnet ist, Maximalposition genannt, die beiden Steuerwellen (8, 9) bzw. die beiden Trennschalter (2, 4) in Rotation verbunden sind, **dadurch gekennzeichnet, dass** sobald der zweite Trennschalter (4) eine gewisse Entfernungsdistanz zu seinem zugehörigen Leitungskontakt (5) erreicht hat, der es ermöglicht, eine gewisse Isolierdistanz in dem entsprechenden Abschnitt zu gewährleisten, die beiden Mechanismen M1, M2 entkoppelt werden, so dass die beiden Wellen (8, 9) ihren Rotationsweg unabhängig voneinander in die Richtung der Öffnung der Trennschalter (2, 4) fortsetzen.

2. Gerät nach Anspruch 1, **dadurch gekennzeichnet, dass** der so genannte erste Trennschalter (2) ein Erdungstrennschalter ist, während der so genannte zweite Trennschalter (4) ein einfacher Trennschalter zur Öffnung des Schaltkreises ist.

3. Gerät nach Anspruch 1 oder 2, **dadurch gekennzeichnet, dass** die Rotationsgeschwindigkeit der Antriebswelle (8) des ersten Trennschalters (2) höher ist als jene der Antriebswelle (9) des zweiten Trennschalters (4), so dass im zweiten Teil der Betätigungssteuerung des Betätigungselements in die Richtung der Öffnung der erste Trennschalter (2) seinen Weg vor dem zweiten (4) beendet.

4. Gerät nach einem der Ansprüche 1 bis 3, **dadurch gekennzeichnet, dass** die vorgenannte Steuervorrichtung ferner Einstellmittel R umfasst, um die Distanzstreuungen zwischen den beiden Geräten C1, C2 aufzunehmen.

5. Gerät nach Anspruch 4, **dadurch gekennzeichnet, dass** der vorgenannte Verbindungsmechanismus L die Einstellmittel R umfasst.

6. Gerät nach einem der vorhergehenden Ansprüche, **dadurch gekennzeichnet, dass** der vorgenannte Verbindungsmechanismus L zwei Kurbeln (6, 7), die drehfest jeweils mit den beiden Steuerwellen (8, 9) des ersten bzw. zweiten Trennschalters (2, 4) verbunden sind, und zwei Hebel (10, 11) umfasst, die gelenkig mit einem ihrer Enden jeweils mit den beiden Kurbeln (6, 7) und mit ihrem entgegengesetzt liegenden Ende miteinander um eine eine Rolle (12) bildende Gelenkachse verbunden sind, die geeignet ist, durch Gleiten mit einer Nut (13) zusammenzuwirken, die in einer Stütze (14) ausgebildet ist, die mechanisch mit dem Gestell X des Geräts verbunden ist, wobei die Nut (13) die Führung der Rolle (12) während des ersten Teils der Betätigungssteuerung des Betätigungselements in die Richtung der Öffnung der Trennschalter (2, 4) gewährleistet, wobei die Rolle (12) aus dieser Nut (13) zum Zeitpunkt des Überschreitens der vorgenannten Maximalposition der Betätigungswelle (8) des ersten Trennschalters (2) freigegeben wird, so dass sich die beiden Wellen (8, 9) nach dieser Position frei mit ihrer eigenen Geschwindigkeit, die von ihrem eigenen Antriebsmittel vorgegeben wird, bis in eine Position drehen können, die einer maximalen Öffnung der Trennschalter (2, 4) entspricht.

7. Gerät nach Anspruch 6, **dadurch gekennzeichnet, dass** die vorgenannte Stütze (14) auch eine Rampe (21) umfasst, die geeignet ist, die Rolle (12) bei einer Betätigung zur Rücksetzung der beiden Trennschalter (2, 4) nach einer Öffnungsbetätigung zu führen, wobei sich diese Rampe (21) in der Verlängerung eines (13b) der Längsränder (13a, 13b) der vorgenannten Nut (13) befindet, so dass bei einer Betätigung zur Rücksetzung der Trennschalter (2, 4) die Rolle (12) zuerst von der Rampe (21) geführt wird, dann in die Nut (13) eindringt und dann von den Längsrändern (13a, 13b) geführt wird, die die Nut (13) begrenzen, wobei die beiden vorgenannten Wellen (8, 9) während der gesamten Rücksetzungsbetätigung gekoppelt sind, wobei die beiden Trennschalter (2, 4) ihre Rücksetzungsposition gleichzeitig erreichen.

8. Gerät nach Anspruch 7, **dadurch gekennzeichnet, dass** die vorgenannte Rampe (21) in der Verlängerung eines (13b) der Längsränder der Nut (13) angeordnet ist, wobei dieser Rand (13b) eine geringere Länge als jene des anderen Längsrandes (13a) aufweist, wobei sich die Rampe (21) unter Entfernung von der Längsrichtung des ersten Längsrandes (13a) erstreckt.

9. Gerät nach Anspruch 8, **dadurch gekennzeichnet, dass** sich die vorgenannte Nut (13) in eine Richtung erstreckt, die sich im Wesentlichen parallel zu der Ebene erstreckt, die durch die beiden Rotationsachsen jeweils der beiden Wellen (8, 9) verläuft.

10. Gerät nach einem der Ansprüche 4 bis 9, **dadurch gekennzeichnet, dass** die vorgenannten Einstellmittel R ein Mittel umfassen, um die Translationsbewegung der Rolle (12) in eine Richtung im Wesentlichen senkrecht auf die Ebene, die die beiden jeweiligen Achsen der beiden Wellen (8, 9) enthält, zu gestatten, wobei diese Bewegung der Rolle einer Änderung des Knicks der Hebel (10, 11) im Bereich der Führungsrolle (12) entspricht und es ermöglicht, einen Ausgleich der Distanzveränderungen zwischen zwei nebeneinanderliegenden Geräten (C1, C2) bei der Montage der beiden Geräte durchzuführen.

11. Gerät nach Anspruch 10, **dadurch gekennzeichnet, dass** die Einstellmittel R eine zweite Stütze (17) umfassen, die mit dem Gestell X des Geräts verbunden ist, wobei die zweite Stütze (17) Öffnungen (16) oder Führungsachsen umfasst, die geeignet sind, mit Führungsachsen (15) bzw. Öffnungen zusammenzuwirken, die in der ersten Stütze (14) vorgesehen sind, um die Translationsführung der ersten Stütze (14) in Bezug zur zweiten Stütze (17) bei der vorgenannten Translation der Rolle zu ermöglichen.

12. Gerät nach einem der Ansprüche 4 bis 11, **dadurch gekennzeichnet, dass** es Mittel zur Positionsfeststellung des Einstellsystems R umfasst.

13. Gerät nach einem der vorhergehenden Ansprüche, **dadurch gekennzeichnet, dass** die beiden Wellen (8, 9) mit Hilfe einer Betätigungsfeder betätigt werden, deren Kraft und somit auch für ihre Betätigung notwendige Kraftaufwendung für die Feder des ersten Trennschalters (2) höher als für die Feder des zweiten Trennschalters (4) ist.

14. Gerät nach einem der vorhergehenden Ansprüche, **dadurch gekennzeichnet, dass** die beiden vorgenannten Geräte (C1, C2) derart ausgeführt sind, dass sie einen Strom von 630 A führen, und derart verbunden sind, dass sie eine Mittelspannungszelle C herstellen, die dazu geeignet ist, einen Strom von 1250 A zu halten.

15. Elektrische Mittelspannungsschutzzelle, **dadurch gekennzeichnet, dass** sie mindestens ein Gerät nach einem der Ansprüche 1 bis 14 umfasst.

## Claims

1. Electrical protection switchgear comprising a device for controlling its earthing, said switchgear being interposed between two parts of an electrical circuit so as to ensure at least the function of passage of the current between the parts, the function of interrupting the current, and the function of earthing one of the abovementioned parts, said switchgear comprising at least two electrical protection apparatuses (C1, C2), respectively a first and a second protection apparatus, mounted in parallel with one another, each apparatus comprising a branch comprising means for interrupting the current and means for isolating the circuit, or breakers, mounted in series, each protection apparatus comprising a mechanism (M1, M2) for controlling its breaker comprising a shaft (8, 9), while the so-called first control mechanism M1 of the breaker of a so-called first of the apparatuses C1 comprises a manoeuvring member that can be actuated by a user, and controls the so-called second control mechanism M2 of the breaker of the so-called second apparatus C2, via a so-called link mechanism L, so that, during a first part of the manoeuvre to actuate the manoeuvring member in the direction of opening of the first breaker (2) to a certain rotational position of the shaft (8) associated with said breaker (2), called maximum position, the two control shafts (8, 9) respectively of the two breakers (2, 4) are linked in rotation, **characterized in that**, as soon as the second breaker (4) has reached a certain distance away from its associated line contact (5), making it possible to ensure a certain insulation distance in the corresponding branch, the two mechanisms M1, M2 are decoupled so that the two shafts (8, 9) continue their rotational travel independently of one another in the direction of opening of the breakers (2, 4).

2. Switchgear according to Claim 1, **characterized in that** the so-called first breaker (2) is an earthing breaker, whereas the so-called second breaker (4) is a simple circuit-opening breaker.

3. Switchgear according to Claim 1 or 2, **characterized in that** the speed of rotation of the driving shaft (8) of the first breaker (2) is higher than that of the driving shaft (9) of the second breaker (4) such that, during the second part of the manoeuvre to actuate the manoeuvring member in the direction of opening, the first breaker (2) finishes its travel before the second (4).

4. Switchgear according to any one of Claims 1 to 3, **characterized in that** the abovementioned control device further comprises adjustment means R for taking up the distance dispersions between the two apparatuses C1, C2.

5. Switchgear according to Claim 4, **characterized in that** the abovementioned link mechanism L comprises said adjustment means R.

6. Switchgear according to any one of the preceding claims, **characterized in that** the abovementioned link mechanism L comprises two cranks (6, 7) secured in rotation respectively to the two control shafts (8, 9) respectively of the first and second breakers (2, 4), two connecting rods (10, 11) linked in an articulated manner by one of their ends respectively to the two cranks (6, 7), and by their opposite end, one to the other, about a roller-forming articulation axis (12) suitable for slidingly cooperating with a groove (13) formed in a support (14) mechanically linked to the frame X of the switchgear, this groove (13) ensuring the guiding of the roller (12) during the first part of the manoeuvre to actuate the manoeuvring member in the direction of opening of the breakers (2, 4), said roller (12) being released from this groove (13) at the moment when the abovementioned maximum position of the actuating shaft (8) of the first breaker (2) is exceeded, such that the two shafts (8, 9), after this position, can rotate freely at their own speed imposed by their own driving means to a position corresponding to a maximum opening of the breakers (2, 4).

7. Switchgear according to Claim 6, **characterized in that** the abovementioned support (14) also comprises a ramp (21) suitable for guiding the roller (12) during a manoeuvre to reconnect the two breakers (2, 4) in line after an opening manoeuvre, this ramp (21) being situated in the extension of one (13b) of the longitudinal edges (13a, 13b) of the abovementioned groove (13) in such a way that, during a manoeuvre to reconnect the breakers (2, 4) in line, the roller (12) is initially guided by the ramp (21), then penetrates into this groove (13) and is then guided by the longitudinal edges (13a, 13b) delimiting this groove (13), the abovementioned two shafts (8, 9) being coupled throughout the in-line reconnection manoeuvre, the two breakers (2, 4) reaching their in-line reconnection position at the same time.

8. Switchgear according to Claim 7, **characterized in that**, the abovementioned ramp (21) being situated in the extension of one (13b) of the longitudinal edges of the groove (13), this edge (13b) has a length less than that of the other longitudinal edge (13a), said ramp (21) being extended with increasing distance away from the longitudinal direction of the first longitudinal edge (13a).

9. Switchgear according to Claim 8, **characterized in that** the abovementioned groove (13) extends in a direction extending substantially parallel to the plane passing through the two axes of rotation respectively of the two shafts (8, 9).

10. Switchgear according to any one of Claims 4 to 9, **characterized in that** the abovementioned adjustment means R comprise a means for allowing the translational displacement of the roller (12) in a direction substantially at right angles to the plane containing the respective two axes of the two shafts (8, 9), this displacement of the roller corresponding to a variation of folding of the connecting rods (10, 11) at the level of the guiding roller (12), and making it possible to produce a compensation of the distance variations between two juxtaposed apparatuses (C1, C2) during the installation of the two apparatuses.

11. Switchgear according to Claim 10, **characterized in that** these adjustment means R comprise a second support (17) secured to the frame X of the switchgear, said second support (17) comprising openings (16), or guiding axes, suitable for cooperating with guiding axes (15), respectively openings, provided in the first support (14) so as to allow the translational guiding of the first support (14) relative to the second support (17) during the abovementioned translation of the roller.

12. Switchgear according to any one of Claims 4 to 11, **characterized in that** it comprises means for blocking the adjustment system R in position.

13. Switchgear according to any one of the preceding claims, **characterized in that** the two shafts (8, 9) are manoeuvred by means of a manoeuvring spring, the force of which, and therefore also the effort needed to actuate them, is higher for the spring of the first breaker (2) than for the spring of the second actuator (4).

14. Switchgear according to any one of the preceding claims, **characterized in that** the abovementioned two apparatuses (C1, C2) are designed to conduct a current of 630 A, and are associated in such a way as to produce a medium-voltage cell C suitable for withstanding a current of 1250 A.

15. Medium-voltage electrical protection cell, **characterized in that** it comprises at least one switchgear according to any one of Claims 1 to 14.
